# EUROPÄISCHE PATENTSCHRIFT

(11) **EP 1 337 875 B1**
(45) Veröffentlichungstag und Bekanntmachung des Hinweises auf die Patenterteilung: **16.04.2008**
(21) Anmeldenummer: 01980099.4
(22) Anmeldetag: 08.11.2001
(51) Int. Cl.: G01S 17/36, G01S 7/491, H03K 23/00

(54) **VERFAHREN UND VORRICHTUNG ZUR FREQUENZSYNTHESE IN EINEM ENTFERNUNGSMESSGERÄT**
METHOD AND DEVICE FOR CARRYING OUT FREQUENCY SYNTHESIS IN A DISTANCE MEASURING DEVICE
PROCEDE ET DISPOSITIF DE SYNTHESE DE FREQUENCE DANS UN APPAREIL DE MESURE DE DISTANCE

(30) Priorität: 30.11.2000 CH 233300
(43) Veröffentlichungstag der Anmeldung: 27.08.2003
(73) Patentinhaber: Leica Geosystems AG, 9435 Heerbrugg (CH)
(72) Erfinder: Leica Geosystems AG, 9435 Heerbrugg (CH)
(74) Vertreter: Schreiber, Wolfgang
(86) Internationale Anmeldenummer: PCT/CH2001/000654
(87) Internationale Veröffentlichungsnummer: WO 2002/044754

(56) Entgegenhaltungen:
- DE-A- 19 643 287
- DE-A- 19 811 550
- US-A- 5 838 755
- US-A- 5 889 436

## Beschreibung

Die Erfindung betrifft ein Verfahren und eine Vorrichtung zur Frequenzsynthese in einem Entfernungsmessgerät gemäss des unabhängigen Verfahrensanspruchs 1 bzw. des unabhängigen Vorrichtungsanspruchs 11. Die Erfindung betrifft auch ein Entfernungsmessgerät gemäss des Patentanspruchs 19.

In der Bauvermessung oder im Innenausbau, beispielsweise zum dreidimensionalen Vermessen von Räumen, werden vielfach elektronische Entfernungsmessgeräte eingesetzt. Sie weisen einen Entfernungsmessbereich von einigen zehn Metern auf und sind oftmals als Handgeräte ausgebildet. Weitere Anwendungsbereiche für Entfernungsmessgeräte sind die geodätische und die industrielle Vermessung. Das Grundprinzip der Entfernungsmessung mit den bekannten Geräten beruht auf der Auswertung einer zeitlichen Veränderung einer Kenngrösse der vom Gerät emitierten und von einem anvisierten Objekt remittierten elektromagnetischen Strahlung. Das Entfernungsmessgerät ist dazu mit einem Sender zur Emission einer intensitätsmodulierten Strahlung ausgestattet. Bei Handgeräten handelt es sich dabei vornehmlich um eine optische Strahlung im sichtbaren Wellenlängenspektrum, um das Anvisieren der Messpunkte zu erleichtern. Die optische Strahlung wird von dem anvisierten Messobjekt remittiert bzw. gestreut und von einem in das Gerät eingebauten Empfänger registriert. Aus der zeitlichen Verzögerung der empfangenen modulierten Strahlung gegenüber der vom Sender emittierten Strahlung ergibt sich die Entfernung zum Messobjekt.

Als Detektoren kommen in den bekannten Entfernungsmessgeräten üblicherweise Pin-Photodioden oder Avalanche-Photodioden zur Wandlung der vom Messobjekt remittierten oder gestreuten Strahlung in elektrische Signale zum Einsatz. Sehr gebräuchlich sind Entfemungsmessgeräte, deren Entferungsbestimmung auf dem Messprinzip der Phasenmessung beruht. Bei derartigen Geräten wird das elektrische Empfangssignal direkt an der Avalanche-Photodiode oder nach einem Vorverstärker mit einer Mischerfrequenz zu einem niederfrequenten Messsignal überlagert. Auf diesem niederfrequenten Signal wird die Phase bestimmt und mit der Phase eines Referenzsignals verglichen. Die Differenz der gemessenen Phase des niederfrequenten Messsignals zur Phase des Referenzsignals ist ein Mass für die Entfernung des Messobjekts.

Für die Umsetzung des auf der Auswertung der Phasendifferenz beruhenden Messprinzips werden einerseits eine Lasermodulationsfrequenz von vorzugsweise grösser 100 MHz sowie Mischerfrequenz benötigt, die nur um den Betrag der Niederfrequenz von der Lasermodulationsfrequenz abweicht. Die Bestimmung der Phase auf dem niederfrequenten Messsignal ist wesentlich einfacher zu realisieren als auf dem ursprünglichen hochfrequenten Empfangssignal. Typischerweise wird daher die Niederfrequenz im Kilohertzbereich, beispielsweise zu 10 kHz, gewählt. Erfolgt die Lasermodulation beispielsweise mit einer Hochfrequenz von 400 MHz, so muss für die Erzeugung des gewünschten niederfrequenten Messsignals eine Mischerfrequenz generiert werden, die nur um 25 ppm von der Hochfrequenz verschieden ist. Dazu ist für die beiden Hochfrequenzen eine möglichst hohe Übersprechdämpfung gefordert. Bei derartig nahe beieinander liegenden Hochfrequenzen sind unerwünschte Seitenbänder jedoch, wenn überhaupt, nur mit ausserordentlich hohem Filterungsaufwand unterdrückbar. Diese Massnahmen sind kostspielig und führen vielfach zu weiteren Fehlerquellen.

Bei den meisten aus dem Stand der Technik bekannten Geräten werden die beiden Hochfrequenzen mit zwei separaten Quarzoszillatoren erzeugt. Einer der beiden Quarzoszillatoren ist dabei spannungsgesteuert und wird in einem Phase-Locked-Loop (PLL) auf die um den Betrag der Niederfrequenz von der Hochfrequenz des anderen Quarzoszillators abweichende Frequenz eingeregelt. Die für die Erzeugung der beiden Hochfrequenzen eingesetzten Quarzoszillatoren müssen innerhalb sehr enger Toleranzen miteinander übereinstimmen. Um die geringen Toleranzen zu gewährleisten, sind aufwändige und kostspielige Herstellverfahren erforderlich. Ausserdem sind Quarzoszillatoren nur für Frequenzbereiche von etwa 100 MHz wirtschaftlich sinnvoll herstellbar. Für Modulationsfrequenzen grösser als 100 MHz sind zusätzlich Frequenzvervielfacher erforderlich, die zusätzliche Kosten verursachen. Alternative Lösungsvarianten für die Erzeugung von Hochfrequenzen jenseits von 100 MHz verwenden in Verbindung mit dem Quarzoszillator zusätzliche Surface-Accoustic-Wave (SAW) Resonatoren oder Filter.

Ein weiterer bekannter Ansatz zur Generierung der Modulationshochfrequenz und der nur geringfügig davon abweichenden Mischerfrequenz besteht in der Direct Digital Synthesis (DDS). Bei diesem Verfahren wird mit einem Quarzoszillator eine Frequenz erzeugt, die elektronisch vervielfacht wird. Aus der derart erzielten Frequenz wird mit Hilfe eines digitalen Phasenakkumulators, einer Cosinustabelle und einem darauffolgenden D/A-Wandler die um die Niederfrequenz unterschiedliche Mischerfrequenz erzeugt Zur Generierung der eigentlichen Hochfrequenzen für die Mudulationsfrequenz und die Mischerfrequenz sind weitere Frequenzvervielfacher erforderlich. Diese Variante der Erzeugung der beiden Hochfrequenzen benötigt zwar nur einen einzigen Quarzoszillator. Das Verfahren ist jedoch schaltungstechnisch sehr aufwändig und weist wegen der Vielzahl der erforderlichen elektronischen Bauteile einen hohen Stromverbrauch auf. Dies ist jedoch insbesondere für kostengünstige Handgeräte ein entscheidender Nachteil. Aus der DE 198 11 550 ist ein Verfahren zur Frequenzsynthese gemäss dem Oberbegriff des Anspruchs 1 bekannt.

Aufgabe der vorliegenden Erfindung ist es daher, diesen Nachteilen des Stands der Technik abzuhelfen. Es sollen ein Verfahren und eine Vorrichtung bereitgestellt werden, mit denen die für die Modulationsfrequenz und für die Mischerfrequenz erforderlichen Hochfrequenzen einfach und kostengünstig generierbar sind. Die Erzeugung der Hochfrequenzen soll mit der geforderten Genauigkeit erfolgen und einen geringen Stromverbrauch aufweisen, damit der Einsatz bei Handgeräten gewährleistet bleibt. Der Frequenzgenerator soll nur einen geringen Platzbedarf aufweisen, damit die Gerätegrösse verringert werden kann. Vorteilhafterweise soll der Aufbau des Frequenzgenerators eine kostengünstige, reproduzierbare Massenfertigung ermöglichen.

Die Lösung dieser Aufgabe besteht in einem Verfahren zur Frequenzsynthese, insbesondere in einem Entfernungsmessgerät, welches die im kennzeichnenden Abschnitt des Patentanspruchs 1 angeführten Merkmale aufweist. Eine erfindungsgemäss ausgebildete Vorrichtung zur Durchführung des Verfahrens weist insbesondere die im Kennzeichen des Patentanspruchs 11 angeführten Merkmale auf. Ein mit einem erfindungsgemässen Frequenzgenerator ausgestattetes Entfernungsmessgerät ist Gegenstand des Patentanspruchs 19. Bevorzugte Ausführungsvarianten und/ oder Weiterbildungen der Erfindung sind Gegenstand der jeweiligen abhängigen Verfahrens- und Vorrichtungsansprüche.

Das erfindungsgemässe Verfahren zur Frequenzsysnthese, insbesondere in einem auf dem Prinzip der Auswertung der zeitlichen Veränderung der Phase einer von einer Strahlungsquelle emitierten und von einem anvisierten Objekt remittierten elektromagnetischen Strahlung basierenden Entfernungsmessgerät, beruht darauf, dass eine, vorzugsweise von einem Quarzoszillator gelieferte, Frequenz in einem Ringoszillator mit N Verzögerungselementen auf eine gewünschte erste Hochfrequenz eingeregelt wird, die als Mischerfrequenz bzw. als Modulationsfrequenz verwendet wird. Die Signale an den N Verzögerungselementen werden einem Multiplexer zugeführt, der mit einem Takt umgeschaltet wird, der dem 2*N-fachen der Frequenz des auszuwertenden niederfrequenten Messsignals entspricht. Am Ausgang des Multiplexers wird dadurch eine um die Frequenz des niederfrequenten Messsignals von der ersten Hochfrequenz verschiedene zweite Hochfrequenz erzeugt, die als Modulationsfrequenz bzw. als Mischerfrequenz einsetzbar ist.

Mit Hilfe des Ringoszillators wird eine erste Hochfrequenz, beispielsweise die Mischerfrequenz erzeugt. Die Anforderungen an die Genauigkeit des Quarzoszillator sind dabei nicht so hoch, so dass kostengünstige Schwingquarze einsetzbar sind. Die eigentliche Hochfrequenz wird mit dem Ringoszillator erzeugt, der N Verzögerungselemente aufweist. Hat ein Verzögerungselement eine Verzögerungszeit t_{d}, so liegt am Ausgang des Ringoszillators die Frequenz 1/ (2 * N * t_{d}) an. Der Spannungsverlauf an den einzelnen Verzögerungselementen ist um je eine Verzögerungszeit phasenverschoben. Wird nun der Multiplexer mit einem Takt, der das N-fache der Frequenz des auszuwertenden, niederfrequenten Messsignals beträgt, umgeschaltet, so verliert die zweite Hochfrequenz am Modulationsausgang für die Strahlungsquelle während einer Niederfrequenzperiode exakt eine Hochfrequenzperiode. Das bedeutet, dass die zweite Hochfrequenz, die Modulationsfrequenz, gerade um die Frequenz des niederfrequenten Messsignals kleiner ist als die erste Hochfrequenz, welche die Mischerfrequenz darstellt. Die bei der Überlagerung der Mischerfrequenz und der Modulationsfrequenz entstehende niederfrequente Schwebungsfrequenz hat zwar keinen kontinuierlichen Signalverlauf. Es entsteht eine Signal mit 2N Stufen., entsprechend der doppelten Anzahl der Verzögerungselemente des Ringoszillators. Bei einer ausreichend hohen Anzahl von Verzögerungselementen und dem Einsatz eines Glättungsfilters ist dieser jedoch nicht weiter störend. Die Anforderungen an das Phasenrauschen des Ringoszillators sind relativ klein, da ja beide Hochfrequenzen von dem selben Oszillator abgeleitet werden. Die Phase der bei der Überlagerung im Empfänger entstehenden Niederfrequenz ist proportional zu der Differenz der Phase der beiden Hochfrequenzen. So fallen grosse Teile des Phasenrauschens der Hochfrequenzoszillatoren im Empfänger wieder weg, da ja beide Phasenrauschen miteinander korreliert sind.

Die Anzahl der Verzögerungselemente im Ringoszillator legt die Phasenschritte fest. Die Anzahl der möglichen Verzögerungselemente kann aber durch die geforderte Modulationsfrequenz und ggf. auch durch das Herstellungsverfahren für den Ringsozillator beschränkt sein. Werden hingegen aus Genauigkeitsanforderungen kleinere Phasenschritte benötigt, so können diese beispielsweise mit einer Verzögerungsleitung am Ausgang des Multiplexers erzeugt werden. Dazu wird die am Ausgang des Multiplexers anliegende zweite Hochfrequenz einer weiteren Anordnung von Verzögerungselementen und einem im Takt der Anzahl der weiteren Verzögerungselemente multipliziert mit der Frequenz des niederfrequenten Messsignals umgeschalteten weiteren Multiplexers zugeführt, um die am ersten Multiplexer anliegenden, groben Phasenschritte in feinere Phasenschritte zu unterteilen, und ein glatteres niederfrequentes Signal zu erreichen.

In einer alternativen Variante, die Abstufungen auf dem niederfrequenten Signal zu reduzieren, können die Zwischenstufen der Hochfrequenz digital interpoliert werden. Dazu wird das Ausgangssignal am ersten Multiplexer nicht durch eine weitere Verzögerungsschaltung geleitet, um direkt von einem Phasenschritt auf den nächsten umzuschalten. Vielmehr wird die Zeit zwischen den einzelnen Phasenschritten in weitere Zeitfenster, beispielsweise in 8 Zeitfenster, unterteilt. Der Multiplexer wird in diesem Zeitfenster zuerst voll auf die untere Stufe geschaltet. Im nächsten Zeitfenster wird der Multiplexer bei dem angegebenen Beispiel im Verhältnis 1/8, 7/8 auf höhere, respektive die untere Phasenstufe geschaltet. Das Verhältnis wird nun mit jedem folgenden Zeitfenster erhöht. Daraus ergeben sich Verhältnisse von 2/8, 6/8; 3/8, 5/8; usw. Dieses Verfahren erlaubt es, mit wenig Aufwand zwischen den einzelnen Phasenstufen zu interpolieren, um einen geglätteten Signalverlauf zu erhalten.

Um die Modulationsfrequenz oder die Micherfrequenz auf eine Vielfaches der Quarzfrequenz einzuregeln, werden die Verzögerungselemente mit spannungsgesteuerter Verzögerung ausgebildet. In einem Phase-Locked-Loop (PLL) wird die Ringoszillatorfrequertz vorzugsweise zum 8-fachen bis zum 64-fachen der Frequenz des Quarzoszillators eingeregelt.

In einer sehr einfachen und kostengünstigen Variante werden als Verzögerungselemente vorzugsweise bistabile Kippstufen, beispielsweise RS Flip Flops, Inverter oder dergleichen Bauelemente eingesetzt.

Besonders vorteilhaft erweist es sich, Ringoszillator und Multiplexer in integrierter Halbleiterbauweise, vorzugsweise in C-MOS Bauweise, zu erstellen. Die integrierte Halbleiterbauweise ist kostengünstig, platzsparend und benötigt insbesondere in C-MOS Bauweise sehr wenig Energie. Dies ist vor allem für batteriebetriebene Geräte ein entscheidender Vorteil.

Für die Erzielung der geforderten Hochfrequenzen mit der gewünschten Feinabstufung der Phasenschritte erweist sich ein Ringoszillator mit 8 bis 32, beispielsweise mit 16, Verzögerungselementen von Vorteil.

Die Auswertung des niederfrequenten Messsignals, insbesondere die Phasenmessung, erfolgt synchron zu einer durch einen Teiler von der Mischerfrequenz abgeleiteten internen niederfrequenten Synchronisationsfrequenz. Mit zunehmender Messdistanz verschiebt sich die Phase des Empfangssignals zu der Phase des internen niederfrequenten Synchronisationssignals. Durch die nichtidealen Verzögerungselemente und andere Toleranzen ist es zwar nicht möglich, durch Umschalten des Multiplexers absolut gleichmässige Phasenschritte zu erzeugen. Die dadurch entstehenden systematischen Phasenfehler werden dadurch stark reduziert, dass die gleiche Distanz bei unterschiedlichen Phasenlagen in Bezug zu dem internen Synchronisationssignal gemessen und dann gemittelt werden. Dies ist sehr einfach zu bewerkstelligen, indem der Umschaltvorgang des Multiplexers nicht am Eingang 1 sondern an einem anderen Eingang gestartet wird.

Die erfindungsgemässe Vorrichtung zur Frequenzsysnthese zeichnet sich durch einen besonders einfachen Aufbau aus. Die Mittel zur Erzeugung einer ersten Hochfrequenz umfassen einen Quarzoszillator, der mit einem Ringoszillator mit N Verzögerungsstufen zusammenwirkt. Die Mittel zur Erzeugung einer um die Frequenz des niederfrequenten Messsignals von der ersten Hochfrequenz verschiedenen zweiten Hochfrequenz umfassen einen Multiplexer, der mit einem Takt umschaltbar ist, welcher dem 2*N-fachen der Frequenz des niederfrequenten Messsignals entspricht. Die Anforderungen an die Genauigkeit des Quarzoszillator sind dabei nicht so hoch, so dass kostengünstige Schwingquarze einsetzbar sind. Die eigentliche Hochfrequenz wird mit dem Ringoszillator erzeugt, der N Verzögerungselemente aufweist Die Anforderungen an das Phasenrauschen des Ringoszillators sind relativ klein, da ja beide Hochfrequenzen von dem selben Oszillator abgeleitet werden. Die Phase der bei der Überlagerung im Empfänger entstehenden Niederfrequenz ist proportional zu der Differenz der Phase der beiden Hochfrequenzen.. So fallen grosse Teile des Phasenrauschens der Hochfrequenzoszillatoren im Empfhänger wieder weg, das ja beide Phasenrauschen miteinander korreliert sind.

Die Anzahl der Verzögerungselemente ergibt die geforderte Modulationsfrequenz und die Feinheit der Phasenschritte. Andererseits legt die Anzahl der Verzögerungselemente auch die Stufigkeit des aus der Überlagerung der beiden Hochfrequenzen gewonnenen niederfrequenten Signals fest. Zweckmässig erweisen sich für den Ringsoszillators 8 bis 64, beispielsweise 16, Verzögerungselemente. Wird der Ringsoszillator beispielsweise auf 400 MHz abgestimmt und ist eine Niederfrequenz von ca. 6,1 kHz gefordert, dann erweisen sich 16 Verzögerungselemente als zweckmässig. Diese sind beispielsweise als RS Flip Flops ausgebildet. Um aus der Hochfrequenz von 400 MHz die geforderte Niederfrequenz von 6,1 kHz zu erhalten, wird die Ringoszillatorfrequenz durch den Faktor 2¹⁶ geteilt. Der Multiplexer, der bei 16 RS Flip Flops 32 Eingänge besitzen muss, muss mit einer um den Faktor 32 höheren Frequenz als die Niederfrequenz sequentiell umgeschaltet werden. Damit ergibt sich am Ausgang des Multiplexers eine von der Ringoszillatorfrequenz gerade um den Betrag der Niederfrequenz abweichende zweite Hochfrequenz.

Zur exakten Besitmmung der Hochfrequenz ist der Ringoszillator mit einem Phase-Locked-Loop (PLL) ausgestattet, über den die Ringoszillatorfrequenz auf ein Vielfaches, vorzugsweise das 8-fache bis 64-fache der Frequenz des Quarzoszillators einregelbar ist Der PLL Regelkreis reduziert das Phasenrauschen des Ringoszillators, das er vor allem die tieffrequenten Phasenrauschanteile ausregelt.

Die mögliche Anzahl der Verzögerungselemente ist durch die geforderte Modulationsfrequenz und gegebenenfalls auch durch den Herstellungsprozess beschränkt. Falls die mit der Anzahl der Verzögerungselemente vorliegende Abstufung der Phasenschritte für die geforderte Genauigkeit zu grob ist, kann der Ausgang des Multiplexers mit einem Verzögerungsglied verbunden sein, welches einen Ringoszillator mit Verzögerungsstufen und einen nachgeschalteten Multiplexer umfasst. Auf diese Weise sind aus den groben Phasenschritte die erforderlichen feineren Phasenabstufungen erzeugbar.

Besonders vorteilhaft erweist sich eine Integration des Frequenzsynthesizers auf einem Halbleiterbauelement. Insbesondere sind dabei Ringoszillator und Multiplexer in integrierter Halbleiterbauweise, beispielsweise in C-MOS Technik hergestellt. Die derart hergestellten Bauelemente sind beliebig reproduzierbar, kostengünstig in der Herstellung und weisen insbesondere in C-MOS Technologie einen geringen Energieverbrauch auf.

Ein erfindungsgemäss ausgestattetes Entfernungsmessgerät nach dem Prinzip der Phasenmessung, besitzt einen Sender zur Emission einer optischen Strahlung, eine Empfangsoptik für die von einem Messobjekt remittierte oder gestreute optische Messstrahlung, einen der Empfangsoptik nachgeschalteten lichtelektrischen Empfänger zur Umwandlung der optischen Strahlung in elektrische Messsignale sowie eine Signalverarbeitungsanlage zum Vergleich der Messsignale mit Referenzsignalen und zur Untersuchung hinsichtlich ihrer Phasenlage, um daraus den Abstand des Messobjekts zu bestimmen und das Ergebnis dem Anwender verfügbar zu machen. Die emittierte Strahlung wird mit einer hochfrequenten Modulationsfrequenz moduliert Eine hochfrequente Mischerfrequenz weicht um die Frequenz des auszuwertenden niederfrequenten Messsignals von der Modulationsfrequenz ab und wird mit dem vom Empfänger gelieferten elektrischen Signal überlagert. Die Mittel zur Erzeugung der hochfrequenten Modulationsfrequenz für die emittierte optische Strahlung und der von der Modulationsfrequenz verschiedenen hochfrequenten Mischerfrequenz, die mit den vom lichtelektrischen Empfänger gelieferten elektrischen Signalen überlagerbar ist, sind gemäss der Erfindung oder einer ihrer Abwandlungen ausgebildet. Dies verbilligt die Herstellung des Entfemungsmessgeräts. Seine Abmessungen können klein gehalten werden. Insbesondere bei einer integrierten Ausbildung der Mittel zur Erzeugung der Hochfrequenzen auf einem oder mehreren Halbleiterbauelementen, vorzugsweise in C-MOS Technologie weist das Gerät auch einen reduzierten Energieverbrauch auf. Dies stellt vor allem für batteriebetriebene Handgeräte einen grossen Vorteil dar.

Im folgenden wird die Erfindung unter Bezugnahme auf in den Zeichnungen schematisch dargestellte Ausführungsbeispiele näher erläutert. Es zeigen:
- Fig. 1: ein erfindungsgemässes Entfernungsmessgerät;
- Fig. 2: ein erstes Ausführungsbeispiel einer Vorrichtung zur Frequenzsynthese;
- Fig. 3: eine Variante der Vorrichtung aus Fig. 2 zur Erzeugung feiner Phasenabstufungen;
- Fig. 4: ein Beispiel eines Regelkreises für eine Vorrichtung zur Frequenzsynthese;
- Fig. 5: eine weitere Variante einer Vorrichtung zur Frequenzsynthese.

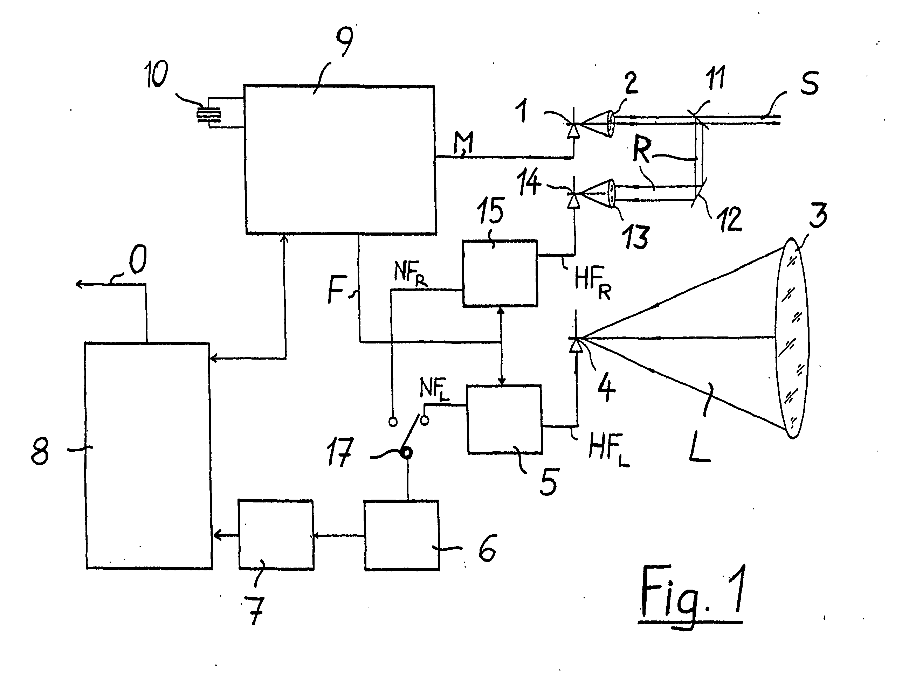

In Fig. 1 ist ein Beispiel eines Entfemungsmessgeräts dargestellt, das mit einer erfindungsgemässen Vorrichtung zur Frequenzsynthese ausgestattet ist. Das Entfernungsmessgerät besitzt eine Laserquelle 1, die vorzugsweise sichtbare Laserstrahlung emittiert. Die emittierte und von einer Kollimationsoptik 2 kollimierte Laserstrahlung wird von einem Strahlteiler 11 in ein Messstrahlenbündel S und in ein Referenzstrahlenbündel R aufgeteilt. Als Strahlteiler 11 kommt beispielsweise ein teildurchlässiger Spielgel zum Einsatz. Die Messstrahlung S gelangt zu einem Messobjekt, dessen Abstand vom Entfernungsmessgerät gemessen werden soll. Die vom Messobjekt remittierte oder gestreute Strahlung L wird von einer Empfangsoptik 3 gesammelt und auf einen Messempfänger 4 geleitet. Als Messempfänger 4 kommt beispielsweise eine PIN Fotodiode zum Einsatz. Die Referenzstrahlung R wird von einem Umlenkspiegel 12 umgelenkt und von einer Optik 13 gesammelt und auf einen Referenzempfänger 14 geleitet. Der Referenzempfänger 14 ist mit Vorteil baugleich zum Empfänger 14 für die Messstrahlung L. Die von der Referenzstrahlung R durchlaufene Wegstrecke vom Strahlteiler 11 zum Referenzempfänger 14 bildet die für die Bestimmung der Phasendifferenz benötigte Referenzstrecke.

Der von der Laserquelle 1 emittierten optische Strahlung ist eine hochfrequente Modulationsfrequenz M aufgeprägt, die von einem Frequenzsynthesizer 9 erzeugt ist, der von einem Referenzquarz 10 angesteuert ist. Durch die hochfrequente Modulationsfrequenz M werden am Empfän-ger 4 und am Referenzempfänger 14 jeweils hochfrequente elektrische Messsignale HF_{L}, HF_{R} erzeugt, die am Eingang von erfindungsgemäss ausgebildeten Vorrichtungen zur Signalerfassung anliegen, welche in Fig. 1 die Bezugszeichen 5 bzw. 15 tragen. Der Frequenzsynthesizer 9 erzeugt auch eine Steuerfrequenz F von ähnlich hoher Frequenz, die über eine Verbindungsleitung den beiden Vorrichtungen zur Signalerfassung 5, 15 zugeführt wird und für beide Vorrichtungen 5,15 den Takt angibt. In den Vorrichtungen zur Signalerfassung 5, 15, die nachstehende noch näher erläutert werden, werden die hochfrequenten Eingangssignale HF_{L}, HF_{R} in niederfrequente Messsignale NF_{L} bzw. Kalibriersignale NF_{R} umgeformt.

Die am Ausgang der beiden erfindungsgemässen Vorrichtungen zur Signalerfassung 5,15 anliegenden niederfrequenten Messsignale NF_{L} bzw. Kalibriersignale NF_{R} werden über einen analogen Schalter 17 sequentiell einem Niederfrequenzfilter 6 zugeführt, in dem die restlichen hochfrequenten Signalanteile herausgefiltert werden. Beispielsweise handelt es sich bei dem Filter um ein Anti-Aliasingfilter. Die gefilterten und verstärkten Mess- bzw. Kalibriersignale NF_{L} bzw. NF_{R} werden in einem Analog/Digital Wandler 7 digitalisiert und in einer digitalen Signalverarbeitungsein- richtung 8 hinsichtlich ihrer Phasenlage ausgewertet. Aus der Phasenlage wird auf die die Entfernung des Messobjekts zurückgeschlossen, die als Signal O an eine Ausgabeeinheit weitergeleitet wird. Die Steuerfrequenz F wird mit Vorteil derart ewählt, dass gilt F = (n * M) ± NF. Die Steuerfrequenz F ist somit ein ganzzahliges Vielfaches der Modulationsfrequenz M vermehrt oder vermindert um den Wert des niederfrequenten Signals NF. Der Wert von n ist dabei grösser als 0.

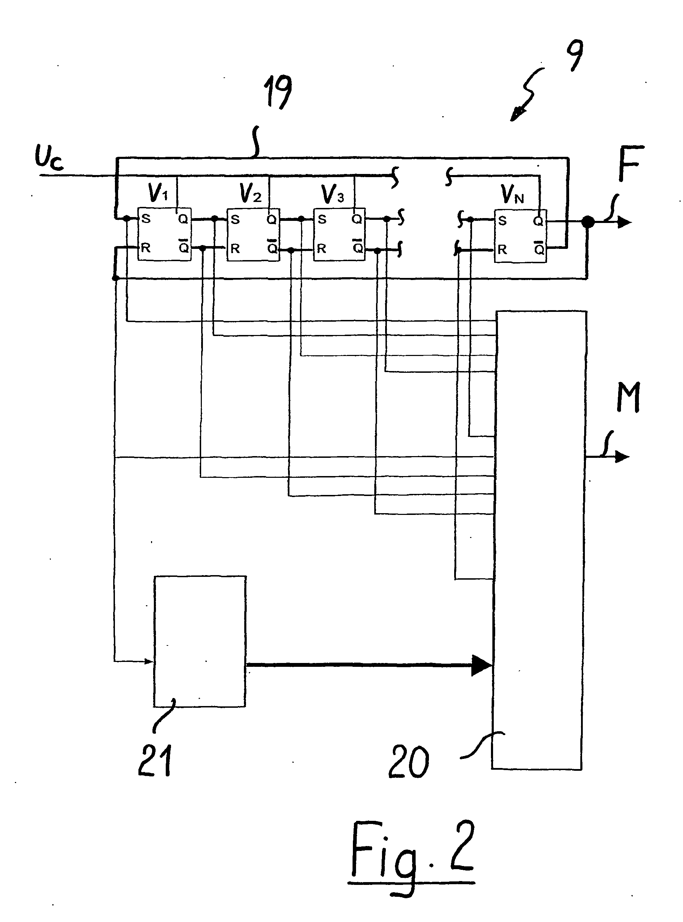

In Fig. 2 ist der Frequenzsynthesizer gesamthaft mit dem Bezugszeichen 9 versehen. Er umfasst einen Ringoszillator 19 mit N Verzögerungselementen V₁, V₂, V₃,..., V_{N}. Die Verzögerungselemente V₁, V₂, V₃,..., V_{N} weisen eine Verzögerung auf, die über eine Spannung Vc gesteuert ist. Bespielsweise handelt es sich bei den Verzögerungselementen V₁, V₂, V₃,..., V_{N} um bistabile Kippstufen, vorzugsweise RS Flip Flops. Anstelle von Flip Flops können auch Inverter als Verzögerungselemente eingesetzt werden. Die Ausgänge der Verzögerungselemente V₁, V₂, V₃,..., V_{N} sind mit einem Multiplexer 20 verbunden, der über einen Frequenzteiler 21 angesteuert ist. Der spannungsgesteuerte Ringoszillator 19 wird beispielsweise auf 400 MHz abgestimmt. Diese erste Hochfrequenz dient beispielsweise als Mischerfrequenz F. Der Ringoszillator 19 besitzt beispielsweise 16 RS Flip Flops als Verzögerungselemente. Um eine Niederfrequenz von ca. 6,1 kHz zu erhalten, wird die Ringoszillatorfrequenz im Frequenzteiler 21 durch den Faktor 2¹⁶ geteilt. Der Multiplexer 20, der bei 16 Flip Flops 32 Eingänge aufweist, wird mit einer um dne Faktor 32 höheren Frequenz als die gewünschte Niederfrequenz sequentiell umgeschaltet. Dadurch liegt am Ausgang des Multiplexers 20 eine zweite Hochfrequenz M an, die einen um den Betrag der Niederfrequenz von der ersten Hochfrequenz F abweichenden Wert aufweist. Diese zweite Hochfrequenz dient beispielsweise als Modulationsfrequenz M für den Laser.

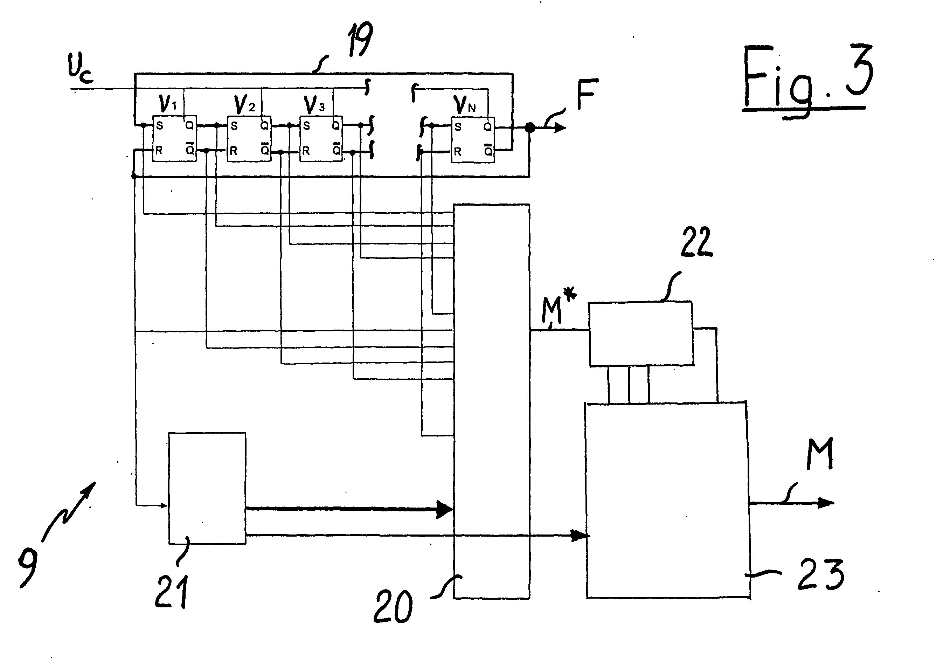

Der in Fig. 2 dargestellte Frequenzsynthesizer ist hinsichtlich seines Aufbaus für eine Integration auf einem Halbleiterbauelement vorbereitet. Beispielsweise wird er in C-MOS Bauweise hergestellt. Die mögliche Anzahl der Verzögerungselemente V₁, V₂, V₃,..., V_{N} ist durch die verwendete Halbleitertechnologie und die geforderte Modulationsfrequenz M beschränkt. Werden aus Genauigkeitsanforderungen kleinere Phasenschritte benötigt, so können mit einer weiteren Verzögerungsleitung am Ausgang des Multiplexers feinere Phasenschritte erzeugt werden. Diese Variante des Frequenzsynthesizers ist in Fig. 3 dargestellt. Dabei wird das hochfrequente Signal M* am Ausgang des Multiplexers 20 einer weiteren Anordnung von Verzögerungselementen 22 zugeführt. Die Ausgänge der Verzögerungselemente sind wiederum mit den Eingängen eines weiteren Multiplexers 23 verbunden, der gleichfalls vom Frequenzteiler 21 angesteuert ist. Die Verzögerungselemente 22 können beispielsweise auch nichtinvertierende Puffer sein, die in Serie geschaltet sind. Am Ausgang des weiteren Multiplexers 23 liegt schliesslich die gewünschte zweite Hochfrequenz M an. In einer alternativen Variante, die ohne zusätzliche Verzögerungsschaltung auskommt, können die Signale am Ausgang des Multiplexers auch digital interpoliert werden.

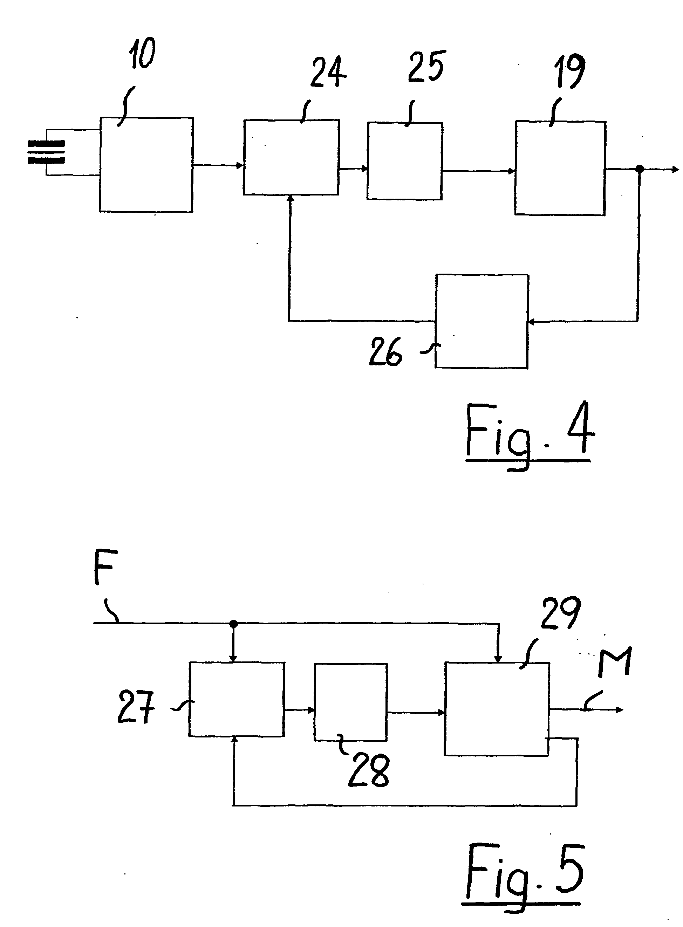

Um die Distanz mit der erforderlichen Genauigkeit bestimmen zu können, müssen die Hochfrequenzen exakt eingeregelt sein. Wie es in Fig. 4 angedeutet ist, wird dazu Frequenz des Ringoszillators 19 mit einem Phase Locked Loop, der aus einem Phasendetektor 24, einem Loop-Filter 25und aus einem Teiler 26 besteht, genau auf ein Vielfaches, beispielsweise das 8-fache bis 64-fache der Frequenz des Quarzoszillators 10 eingeregelt. Durch diesen Regelkreis wird auch das Phasenrauschen des Ringoszillators 19 reduziert, da der Quarzoszillator 10 ein sehr rauscharmes Signal liefert und vor allem die tieffrequenten Phasenrauschanteile ausgeregelt werden.

Fig. 5 zeigt eine weitere Ausführungsvariante des Frequenzsynthesizers. Bei dieser Variante sind die Generierung der Mischerfrequenz F und der Modulationsfrequenz M völlig voneinander getrennt. Die Mischerfrequenz F kann beispielsweise über einen Ringoszillator gemäss Fig. 2 hergestellt werden. Dieser kann in integrierter Bauweise auf einem separaten Halbleiterbauelement angeordnet sein. Die Mischerfrequenz wird einem Phasendetektor 27 zugeführt. Das Signal des Phasendetektors 27 gelangt nach Passieren eines Loopfilters 28 in eine spannungsgesteuerte Verzögerungsanordnung 29 mit N Verzögerungselementen und einem Multiplexer. Die Mischerfrequenz F dient auch zur Ansteuerung der Verzögerungsanordnung 29. Dadurch liegt am Ausgang der Verzögerungsanordnung 29 die gewünschte Modulationsfrequenz M an. Durch die räumliche Trennung der Synthese der beiden Hochfrequenzen F, M wird eine deutlich verbesserte Signaltrennung erzielt. Ein Übersprechen ist praktisch ausgeschaltet

## Patentansprüche

1. Verfahren zur Frequenzsynthese, insbesondere in einem auf dem Prinzip der Auswertung der zeitlichen Veränderung einer Kenngrösse, vorzugsweise der Phase, einer von einer Strahlungsquelle (1) emitierten und von einem anvisierten Objekt remittierten elektromagnetischen Strahlung (S) basierenden Entfernungsmessgerät, bei dem eine hochfrequente Modulationsfrequenz (M) für die emittierte elektromagnetische Strahlung (S) und eine hochfrequente Mischerfrequenz (F) zur Überlagerung mit der vom Objekt remittierten und von einem Detektor (4) in hochfrequent modulierte elektrische Signale umgewandelten Strahlung, welche Mischerfrequenz (F) um die Frequenz eines auszuwertenden niederfrequenten Messsignals (NF) von der Modulationsfrequenz (M) verschieden ist, erzeugt werden, **dadurch gekennzeichnet, dass** eine, vorzugsweise von einem Quarzoszillator (10) gelieferte, Frequenz in einem Ringoszillator (19) mit N Verzögerungselementen (V₁, V₂, V₃,..., V_{N}) auf eine gewünschte erste Hochfrequenz (F) eingeregelt wird, die als Mischerfrequenz bezichungsweise als Modulationsfrequenz verwendet wird, und die Signale an den N Verzögerungselementen (V₁, V₂, V₃,..., V_{N}) einem Multiplexer (20) zugeführt werden, der mit einem Takt umgeschaltet wird, der dem 2*N-fachen der Frequenz des niederfrequenten Messsignals (NF) entspricht, wobei am Ausgang des Multiplexers (20) eine um die Frequenz des niederfrequenten Messsignals (NF) von der ersten Hochfrequenz (F) verschiedene zweite Hochfrequenz (M) erzeugt wird, die als Modulationsfrequenzbeziechungsweise als Mischerfrequenz einsetzbar ist.

2. Verfahren nach Anspruch 1, **dadurch gekennzeichnet, dass** die am Ausgang des Multiplexers anliegende zweite Hochfrequenz (M*) einer weiteren Anordnung von Verzögerungselementen (22) und einem im Takt der Anzahl der weiteren Verzögerungselemente multipliziert mit der Frequenz des niederfrequenten Messsignals (NF) umgeschalteten weiteren Multiplexer (23) zugeführt wird, um die am ersten Multiplexer anliegenden groben Phasenschritte in feinere Phasenschritte zu unterteilen.

3. Verfahren nach Anspruch 1, **dadurch gekennzeichnet, dass** die am Ausgang des Multiplexers anliegende zweiten Hochfrequenz digital interpoliert wird.

4. Verfahren nach einem der vorangehenden Ansprüche, **dadurch gekennzeichnet, dass** die Verzögerungselemente (V₁, V₂, V₃,..., V_{N}) mit einer spannungsgesteuerten Verzögerung ausgebildet werden.

5. Verfahren nach Anspruch 4, **dadurch gekennzeichnet, dass** die Ringoszillatorfrequenz vorzugsweise mit einem Phase-Locked-Loop (PLL) (24, 25, 26) zu einem Vielfachen, beispielsweise zum 16-fachen, der Frequenz des Quarzoszillators (10) eingeregelt wird.

6. Verfahren nach einem der vorangehenden Ansprüche, **dadurch gekennzeichnet, dass** als Verzögerungselemente (V₁, V₂, V₃,..., V_{N}) vorzugsweise bistabile Kippstufen, beispielsweise RS Flip Flops, Inverter oder dergleichen Bauelemente eingesetzt werden.

7. Verfahren nach einem der vorangehenden Ansprüche, **dadurch gekennzeichnet, dass** Ringoszillator (19) und Multiplexer (20) in integrierter Halbleiterbauweise, vorzugsweise in C-MOS Bauweise, erstellt werden.

8. Verfahren nach einem der vorangehenden Ansprüche, **dadurch gekennzeichnet, dass** der Ringoszillator zur Erzeugung der ersten Hochfrequenz (F) und ein weiterer Ringoszillator samt Multiplexer (29) zur Erzeugung der um die Frequenz des niederfrequenten Messsignals davon verschiedenen zweiten Hochfrequenz (M) auf zwei unterschiedlichen Halbleiterbauelementen angeordnet sind, wobei die an einem Ausgang des ersten Halbleiterbauelements anliegende erste Hochfrequenz (F) an einen Eingang des den Multiplexer aufweisenden zweiten Halbleiterbauelements angelegt wird.

9. Verfahren nach einem der vorangehenden Ansprüche, **dadurch gekennzeichnet, dass** der Ringoszillator (19) mit 8 bis 64, beispielsweise mit 16, Verzögerungselementen (V₁, V₂, V₃,..., V_{N}) ausgestattet wird.

10. Verfahren nach einem der vorangehenden Ansprüche, **dadurch gekennzeichnet, dass** die Auswertung des niederfrequenten Messsignals, beispielsweise die Phasenmessung, synchron zu einer durch einen Teiler von der Mischerfrequenz abgeleiteten internen niederfrequenten Synchronisationsfrequenz durchgeführt wird.

11. Vorrichtung zur Frequenzsysnthese, insbesondere in einem auf dem Prinzip der Auswertung der zeitlichen Veränderung einer Kenngrösse, insbesondere der Phase, einer von einer Strahlungsquelle (1) emitierten und von einem anvisierten Objekt remittierten elektromagnetischen Strahlung basierenden Entfernungsmessgerät, mit Mitteln zur Erzeugung einer hochfrequenten Modulationsfrequenz (M) für die emittierte elektromagnetische Strahlung (S) und weiteren Mitteln zur Erzeugung einer hochfrequenten Mischerfrequenz (F) zur Überlagerung mit der vom Objekt remittierten und von einem Detektor (4) in hochfrequent modulierte elektrische Signale umgewandelten Strahlung, welche Mischerfrequenz (F) um die Frequenz eines auszuwertenden niederfrequenten Messsignals (NF) von der Modulationsfrequenz (M) verschieden ist, **dadurch gekennzeichnet, dass** die Mittel zur Erzeugung einer ersten Hochfrequenz (F) einen Quarzoszillator (10) umfassen, der mit einem Ringoszillator (19) mit N Verzögerungselementen (V₁, V₂, V₃,..., V_{N}) zusammenwirkt, und dass die Mittel zur Erzeugung einer um die Frequenz des niederfrequenten Messsignals (NF) von der ersten Hochfrequenz (F) verschiedenen zweiten Hochfrequenz (M) einen Multiplexer (20) umfassen, der mit einem Takt umschaltbar ist, welcher dem 2*N-fachen der Frequenz des niederfrequenten Messsignals (NF) entspricht, wodurch am Ausgang des Multiplexers (20) die zweite Hochfrequenz (M) erzeugbar ist.

12. Vorrichtung nach Anspruch 11, **dadurch gekennzeichnet, dass** die Verzögerungselemente (V₁, V₂, V₃,..., V_{N}) des Ringoszillators (19) spannungsgesteuert sind und vorzugsweise bistabile Kippstufen, beispielsweise RS-Flip-Flops, Inverter oder dergleichen wirkende Bauelemente umfasst.

13. Vorrichtung nach Anspruch 11 oder 12, **dadurch gekennzeichnet, dass** die Anzahl der Verzögerungselemente (V₁, V₂, V₃,..., V_{N}) des Ringoszillators (19) 8 bis 64, beispielsweise 16, beträgt

14. Vorrichtung nach einem der Ansprüche 11 - 13, **dadurch gekennzeichnet, dass** der Ringoszillator (19) einen Phase-Locked-Loop (PLL) aufweist, über den die Ringoszillatorfrequenz auf ein Vielfaches, vorzugsweise das 8-fache bis 64-fache der Frequenz des Quarzoszillators (10) einregelbar ist

15. Vorrichtung nach einem der Ansprüche 11 - 14, **dadurch gekennzeichnet, dass** der Ausgang des Multiplexers (20) mit einem Verzögerungsglied verbunden ist, welches einen weiteren Ringoszillator (22) mit Verzögerungselementen und einen nachgeschalteten Multiplexer (23) umfasst.

16. Vorrichtung nach einem der Ansprüche 11 - 14, **dadurch gekennzeichnet, dass** der Ausgang des Multiplexers (20) mit einer Einrichtung zur digitalen Interpolation des hochfrequenten Ausgangssignals verbunden ist.

17. Vorrichtung nach einem der Ansprüche 11 - 16, **dadurch gekennzeichnet, dass** Ringoszillator (19) und Multiplexer (20) in integrierter Halbleiterbauweise, beispielsweise in C-MOS Technik erstellt sind.

18. Vorrichtung nach Anspruch 17, **dadurch gekennzeichnet, dass** die Mittel zur Erzeugung der ersten Hochfrequenz (F) und die Mittel zur Erzeugung der zweiten Hochfrequenz (M) auf separaten integrierten Halbleiterbauelementen angeordnet sind.

19. Entfernungsmessgerät nach dem Prinzip der Phasenmessung, mit einem Sender (1) zur Emission einer optischen Strahlung (S), einer Empfangsoptik (3) für die von einem Messobjekt remittierte oder gestreute optische Messstrahlung (L), einem der Empfangsoptik (3) nachgeschalteten lichtelektrischen Empfänger (4) zur Umwandlung der optischen Strahlung (L) in elektrische Messsignale sowie einer Signalverarbeitungsanlage (8) zum Vergleich der Messsignale mit Referenzsignalen und zur Untersuchung hinsichtlich ihrer Phasenlage, um daraus den Abstand des Messobjekts zu bestimmen und das Ergebnis dem Anwender verfügbar zu machen, sowie mit Mitteln (9) zur Erzeugung einer hochfrequenten Modulationsfrequenz (M) für die emittierte optische Strahlung (S) und einer von der Modulationsfrequenz (M) verschiedenen hochfrequenten Mischerfrequenz (F), die mit den vom lichtelektrischen Empfänger (4) gelieferten elektrischen Signalen überlagerbar ist, **gekennzeichnet, durch** eine Vorrichtung (9) zur Frequenzsynthese gemäss einem der Patentansprüche 11-18.

## Claims

1. Method for frequency synthesis, particularly in a range measuring instrument based on the principle of evaluating the variation as a function of time in a characteristic quantity, preferably the phase, of electromagnetic radiation (S) emitted by a radiation source (1) and re-emitted by a sighted object, in which a high-frequency modulation frequency (M) for the emitted electromagnetic radiation (S) and a high-frequency mixing frequency (F) for superposition with the radiation re-emitted by the object and converted by a detector (4) into high-frequency-modulated electrical signals are generated, which mixing frequency (F) differs from the modulation frequency (M) by the frequency of a low-frequency measurement signal (NF) to be evaluated, **characterised in that** a frequency, preferably delivered by a quartz oscillator (10), is latched in a ring oscillator (19) with N delay elements (V₁, V₂, V₃,...,V_{N}) onto a desired first high frequency (F) which is used as the mixing frequency or as the modulation frequency, and the signals at the N delay elements (V₁, V₂, V₃,...,V_{N}) are fed to a multiplexer (20) which is switched with a clock that corresponds to 2*N times the frequency of the low-frequency measurement signal (NF), a second high frequency (M) which differs from the first high frequency (F) by the frequency of the low-frequency measurement signal (NF), and which can be used as the modulation frequency or as the mixing frequency, being generated at the output of the multiplexer (20).

2. Method according to Claim 1, **characterised in that** the second high frequency (M*) supplied at the output of the multiplexer is fed to a further arrangement of delay elements (22) and a further multiplexer (23), which is switched with a clock given by the number of further delay elements multiplied by the frequency of the low-frequency measurement signal (NF), in order to subdivide the coarse phase increments supplied at the first multiplexer into finer phase increments.

3. Method according to Claim 1, **characterised in that** the second high frequency supplied at the output of the multiplexer is digitally interpolated.

4. Method according to one of the preceding claims,
**characterised in that** the delay elements (V₁, V₂, V₃,...,V_{N}) are formed with a voltage-controlled delay.

5. Method according to Claim 4, **characterised in that** the ring oscillator frequency is preferably latched by a phase-locked loop (PLL) (24, 25, 26) to a multiple, for example 16 times, the frequency of the quartz oscillator (10).

6. Method according to one of the preceding claims,
**characterised in that** bistable trigger circuits, for example RS flip-flops, inverters or similar components, are used as delay elements (V₁, V₂, V₃,...,V_{N}).

7. Method according to one of the preceding claims,
**characterised in that** the ring oscillator (19) and the multiplexer (20) are produced in integrated semiconductor design, preferably in C-MOS design.

8. Method according to one of the preceding claims,
**characterised in that** the ring oscillator for generating the first high frequency (F), and a further ring oscillator together with a multiplexer (29) for generating the second high frequency (M) differing therefrom by the value of the low-frequency measurement signal, are arranged on two different semiconductor components, the first high frequency (F) supplied at an output of the first semiconductor component being applied to an input of the second semiconductor component comprising the multiplexer.

9. Method according to one of the preceding claims,
**characterised in that** the ring oscillator (19) is equipped with from 8 to 64, for example 16 delay elements (V₁, V₂, V₃, ..., V_{N}).

10. Method according to one of the preceding claims,
**characterised in that** the evaluation of the low-frequency measurement signal, for example the phase measurement, is carried out synchronously with an internal low-frequency synchronisation frequency derived from the mixing frequency by a divider.

11. Device for frequency synthesis, particularly in a range measuring instrument based on the principle of evaluating the variation as a function of time in a characteristic quantity, in particular the phase, of electromagnetic radiation emitted by a radiation source (1) and re-emitted by a sighted object, having means for generating a high-frequency modulation frequency (M) for the emitted electromagnetic radiation (S) and further means for generating a high-frequency mixing frequency (F) for superposition with the radiation re-emitted by the object and converted by a detector (4) into high-frequency-modulated electrical signals, which mixing frequency (F) differs from the modulation frequency (M) by the frequency of a low-frequency measurement signal (NF) to be evaluated, **characterised in that** the means for generating a first high frequency (F) comprise a quartz oscillator (10), which cooperates with a ring oscillator (19) having N delay elements (V₁, V₂, V₃,...,V_{N}), and **in that** the means for generating a second high frequency (M) which differs from the first high frequency (F) by the frequency of the low-frequency measurement signal (NF) comprise a multiplexer (20), which can be switched with a clock that corresponds to 2*N times the frequency of the low-frequency measurement signal (NF) so that the second high frequency (M) can be generated at the output of the multiplexer (20).

12. Device according to Claim 11, **characterised in that** the delay elements (V₁, V₂, V₃,..., V_{N}) of the ring oscillator (19) are voltage-controlled and preferably comprise bistable trigger circuits, for example RS flip-flops, inverters or similarly acting components.

13. Device according to Claim 11 or 12, **characterised in that** the number of delay elements (V₁, V₂, V₃, ..., V_{N}) of the ring oscillator (19) is from 8 to 64, for example 16.

14. Device according to one of Claims 11 - 13, **characterised in that** the ring oscillator (19) comprises a phase-locked loop (PLL) by which the ring oscillator frequency can be latched to a multiple, preferably 8 times to 64 times the frequency of the quartz oscillator (10).

15. Device according to one of Claims 11 - 14,
**characterised in that** the output of the multiplexer (20) is connected to a delay component, which comprises a further ring oscillator (22) having delay elements and a downstream multiplexer (23).

16. Device according to one of Claims 11 - 14,
**characterised in that** the output of the multiplexer (20) is connected to an instrument for digital interpolation of the high-frequency output signal.

17. Device according to one of Claims 11 - 16,
**characterised in that** the ring oscillator (19) and the multiplexer (20) are produced in integrated semiconductor design, preferably in C-MOS technology.

18. Device according to Claim 17, **characterised in that** the means for generating the first high frequency (F) and the means for generating the second high frequency (M) are arranged on separate integrated semiconductor components.

19. Range measuring instrument according to the principle of phase measurement, having a transmitter (1) for emitting optical radiation (S), reception optics (3) for the optical measurement radiation (L) re-emitted or scattered by a measurement object, a photoelectric receiver (4) downstream of the reception optics (3) in order to convert the optical radiation (L) into electrical measurement signals, as well as a signal processing system (8) for comparing the measurement signals with reference signals and for examination in respect of its phase angle, in order to determine the range of the measurement object therefrom and make the result available to the user, and having means (9) for generating a high-frequency modulation frequency (M) for the emitted optical radiation (S) and a high-frequency mixing frequency (F), which differs from the modulation frequency (M) and can be superposed with the electrical signals delivered by the photoelectric receiver (4), **characterised by** a frequency synthesis device (9) according to one of Patent Claims 11 - 18.

## Revendications

1. Procédé de synthèse de fréquence, en particulier dans un appareil télémétrique basé sur le principe de l'évaluation de la variation temporelle d'un paramètre, de préférence de la phase, d'un rayonnement électromagnétique (S) émis par une source de rayonnement (1) et réfléchi par un objet visé, dans lequel sont générées une haute fréquence de modulation (M) pour le rayonnement électromagnétique émis (S) et une haute fréquence de mélangeur (F) destinée à être superposée au rayonnement réfléchi par l'objet et converti par un détecteur (4) en signaux électriques modulés en haute fréquence, laquelle fréquence de mélangeur (F) est différente de la fréquence de modulation (M) de la fréquence d'un signal de mesure à basse fréquence à évaluer (NF), **caractérisé en ce qu'**une fréquence, de préférence délivrée par un oscillateur à cristal (10), dans un oscillateur annulaire (19) avec N éléments de retard (V₁, V₂, V₃,..., V_{N}) est réglée sur une première haute fréquence souhaitée (F), qui est utilisée comme fréquence de mélangeur ou fréquence de modulation, et les signaux sur les N éléments de retard (V₁,V₂, V₃,..., V_{N}) sont acheminés à un multiplexeur (20), qui est commuté à une cadence qui correspond à 2*N fois la fréquence du signal de mesure à basse fréquence (NF), une deuxième haute fréquence (M) différente de la première haute fréquence (F) de la fréquence du signal de mesure à basse fréquence (NF) étant générée à la sortie du multiplexeur (20),
qui peut être utilisée comme fréquence de modulation ou fréquence de mélangeur.

2. Procédé selon la revendication 1, **caractérisé en ce que** la deuxième haute fréquence (M*) appliquée à la sortie du multiplexeur est acheminée à un autre agencement d'éléments de retard (22) et à un autre multiplexeur (23) commuté à la cadence du nombre des autres éléments de retard multiplié par la fréquence du signal de mesure à basse fréquence (NF) pour diviser les étapes de phases grossières appliquées au premier multiplexeur en étapes de phases plus fines.

3. Procédé selon la revendication 1, **caractérisé en ce que** la deuxième haute fréquence appliquée à la sortie du multiplexeur est interpolée numériquement.

4. Procédé selon l'une quelconque des revendications précédentes, **caractérisé en ce que** les éléments de retard (V₁, V₂, V₃,..., V_{N}) se présentent avec un retard commandé en tension.

5. Procédé selon la revendication 4, **caractérisé en ce que** la fréquence de l'oscillateur annulaire est de préférence réglée avec un circuit à verrouillage de phase (PLL) (24, 25, 26) à plusieurs fois, par exemple à 16 fois la fréquence de l'oscillateur à cristal (10).

6. Procédé selon l'une quelconque des revendications précédentes, **caractérisé en ce que** l'on utilise comme éléments de retard (V₁, V₂, V₃,..., V_{N}) de préférence des bascules électroniques bistables, par exemple des circuits bistables RS, des inverseurs ou des composants similaires.

7. Procédé selon l'une quelconque des revendications précédentes, **caractérisé en ce que** l'oscillateur annulaire (19) et le multiplexeur (20) sont élaborés en structure semi-conductrice intégrée, de préférence en structure C-MOS.

8. Procédé selon l'une des revendications précédentes, **caractérisé en ce que** l'oscillateur annulaire pour générer la première haute fréquence (F) et un autre oscillateur annulaire associé au multiplexeur (29) pour générer la deuxième haute fréquence (M), différente de la première de la fréquence du signal de mesure à basse fréquence sont agencés sur deux composants semi-conducteurs différents, la première haute fréquence (F) appliquée à une sortie du premier composant semi-conducteur étant appliquée à une entrée du deuxième composant semi-conducteur présentant le multiplexeur.

9. Procédé selon l'une quelconque des revendications précédentes, **caractérisé en ce que** l'oscillateur annulaire (19) est équipé de 8 à 64, par exemple de 16 éléments de retard (V₁, V₂, V₃,..., V_{N}).

10. Procédé selon l'une quelconque des revendications précédentes,
**caractérisé en ce que** l'évaluation du signal de mesure à basse fréquence, par exemple la mesure de phase, est effectuée de manière synchrone avec une basse fréquence de synchronisation interne dérivée de la fréquence de mélangeur à l'aide d'un diviseur.

11. Dispositif de synthèse de fréquence, en particulier dans un appareil télémétrique basé sur le principe de l'évaluation de la modification temporelle d'un paramètre, en particulier de la phase, d'un rayonnement électromagnétique (S) émis par une source de rayonnement (1) et réfléchi par un objet visé, comprenant des moyens pour générer une haute fréquence de modulation (M) pour le rayonnement électromagnétique émis (S) et d'autres moyens pour générer une haute fréquence de mélangeur (F) destinée à être superposée au rayonnement réfléchi par l'objet et converti par un détecteur (4) en signaux électriques de haute fréquence modulés, laquelle fréquence de mélangeur (F) est différente de la fréquence de modulation (M) de la fréquence d'un signal de mesure à basse fréquence à évaluer (NF), **caractérisé en ce que** les moyens pour générer une première haute fréquence (F) comprennent un oscillateur à cristal (10) qui coopère avec un oscillateur annulaire (19) avec N éléments de retard (V₁, V₂, V₃,..., V_{N}) et **en ce que** les moyens pour générer une deuxième haute fréquence (M) différente de la première haute fréquence (F) de la fréquence du signal de mesure à basse fréquence (NF) comprennent un multiplexeur (20) qui peut être commuté à une cadence qui correspond à 2*N fois la fréquence du signal de mesure à basse fréquence (NF), ce qui permet de générer la deuxième haute fréquence (M) à la sortie du multiplexeur (20).

12. Dispositif selon la revendication 11, **caractérisé en ce que** les éléments de retard (V₁, V₂, V₃,..., V_{N}) de l'oscillateur annulaire (19) sont commandés en tension et comprennent de préférence des bascules électroniques bistables, par exemple des circuits bistables RS, des inverseurs ou des composants à action similaire.

13. Dispositif selon la revendication 11 ou 12, **caractérisé en ce que** le nombre d'éléments de retard (V₁, V₂, V₃,..., V_{N}) de l'oscillateur annulaire (19) varie de 8 à 64 et est par exemple de 16.

14. Dispositif selon l'une quelconque des revendications 11 à 13, **caractérisé en ce que** l'oscillateur annulaire (19) présente un circuit à verrouillage de phase (PLL) qui permet de régler la fréquence de l'oscillateur annulaire sur plusieurs fois, de préférence sur 8 à 64 fois la fréquence de l'oscillateur à cristal (10).

15. Dispositif selon l'une quelconque des revendications 11 à 14, **caractérisé en ce que** la sortie du multiplexeur (20) est connectée à un élément de retard qui comprend un autre oscillateur annulaire (22) avec des éléments de retard, et un multiplexeur connecté en aval (23).

16. Dispositif selon l'une quelconque des revendications 11 à 14, **caractérisé en ce que** la sortie du multiplexeur (20) est connectée à un dispositif d'interpolation numérique du signal de sortie à haute fréquence.

17. Dispositif selon l'une quelconque des revendications 11 à 16, **caractérisé en ce que** l'oscillateur annulaire (19) et le multiplexeur (20) sont élaborés en structure semi-conductrice intégrée, par exemple en technique C-MOS.

18. Dispositif selon la revendication 17, **caractérisé en ce que** les moyens pour générer la première haute fréquence (F) et les moyens pour générer la deuxième haute fréquence (M) sont agencés sur des composants semi-conducteurs intégrés séparés.

19. Appareil télémétrique selon le principe de mesure de phase, comprenant un émetteur (1) pour l'émission d'un rayonnement optique (S), un dispositif de réception optique (3) pour le rayonnement de mesure optique (L) réfléchi ou dispersé par un objet de mesure, un récepteur photoélectrique (4) connecté en aval du dispositif de réception optique pour convertir le rayonnement optique (L) en signaux de mesure électriques ainsi qu'une installation de traitement du signal (8) pour comparer les signaux de mesure à des signaux de référence et pour les analyser compte-tenu de leur situation de phase afin de déterminer à partir de là la distance de l'objet de mesure et de mettre le résultat à la disposition de l'utilisateur, ainsi que des moyens (9) pour générer une haute fréquence de modulation (M) pour le rayonnement optique émis (S) et une haute fréquence de mélangeur (F) différente de la fréquence de modulation (M) qui est superposable aux signaux électriques délivrés par le récepteur photoélectrique (4), **caractérisé par** un dispositif (9) pour la synthèse de fréquence selon l'une quelconque des revendications 11 à 18.
